# FASCICULE DE BREVET EUROPEEN

(11) **EP 3 973 756 B1**
(45) Date de publication et mention de la délivrance du brevet: **31.07.2024**
(21) Numéro de dépôt: 21197028.0
(22) Date de dépôt: 16.09.2021
(51) Int. Cl.: A01B 63/16, A01B 73/04, B60B 27/00, B60B 35/10, A01B 73/00, A01D 57/20

(54) **MACHINE AGRICOLE TRAINÉE DE RÉCOLTE AVEC UN ESSIEU RÉGLABLE**
GEZOGENE LANDWIRTSCHAFTLICHE ERNTEMASCHNIE MIT EINER VERSTELLBAREN ACHSVORRICHTUNG
TRAILED AGRICULTURAL MACHINE FOR HARVESTING WITH AN ADJUSTABLE AXLE

(30) Priorité: 29.09.2020 FR 2009865
(43) Date de publication de la demande: 30.03.2022
(73) Titulaire: Kuhn SAS, 67700 Saverne (FR)
(72) Inventeur: HALTER, Cédric, 67310 WASSELONNE (FR)
(74) Mandataire: Cabinet Nuss

(56) Documents cités:
- EP-A1- 2 042 023
- EP-A1- 3 707 983
- EP-A2- 2 168 786
- DE-A1- 4 407 695
- US-A- 5 464 243

## Description

La présente invention est relative au domaine du machinisme agricole, plus particulièrement des machines agricoles de récolte trainées, et a pour objet une machine agricole trainée à deux unités et son procédé de mise en oeuvre.

Plus particulièrement, l'invention se rapporte à une machine agricole trainée de récolte d'un produit végétal tel que de l'herbe, se déplaçant normalement selon une direction d'avance A.

Une telle machine comprend généralement un châssis sur lequel sont montés, d'une part, un dispositif d'essieu reliant deux roues au châssis, et, d'autre part, deux unités de traitement équipées chacune d'un organe de groupage respectif. Chaque unité de traitement est articulée avec le châssis au moins autour d'un axe de pliage de sorte à pouvoir occuper sélectivement au moins : i) une position de travail dans laquelle elle s'étend transversalement à une direction d'avance et repose au moins partiellement sur le sol, ii) une position de manoeuvre dans laquelle son poids est entièrement supporté par le châssis et dans laquelle son extrémité extérieure est plus éloignée du châssis que l'extrémité extérieure de chaque roue, et iii) une position de transport dans laquelle elle s'étend transversalement à l'axe de roulement de la roue respective.

Une machine agricole trainée et comprenant deux unités de traitement telles que décrites ci-dessus, est connue du document EP 2 042 023 A1. Grâce à ces deux unités, cette machine dispose d'une largeur de travail importante permettant de récolter l'intégralité d'un champ en moins de passes. Lorsque les unités de traitement sont soulevées, comme par exemple dans la position de manoeuvre (ou intermédiaire), le poids des deux unités (qui repose en totalité sur les roues) peut entrainer, notamment en dévers et/ou lors de virages serrés, ou sur un chemin bosselé, un basculement sur le côté de la machine. Un tel basculement engendre une immobilisation de la machine, et peut provoquer des dégâts sur la machine et/ou sur le tracteur, ainsi que des blessures graves aux personnes environnantes.

Par ailleurs, la quantité de produit déplacé par la machine, respectivement par les organes de groupage, est proportionnelle à la largeur de travail. Une largeur de travail importante implique que la quantité de produit déplacé par la machine est plus importante. Lorsque le produit est dirigé au centre de la machine par les organes de groupage, il se retrouve circonscrit par les roues, le châssis et/ou le dispositif d'essieu. Suivant les conditions (taille, type, densité du produit sur pied...), le volume de produit peut être tel que l'andain se retrouve compacté, résultant en un séchage plus lent, plus inégal et en une moindre qualité de fourrage. Les roues présentent en outre un risque plus élevé de rouler sur l'andain, ce qui entraine un compactage plus important encore du produit au niveau des bandes de roulement.

La présente invention a pour but essentiel de pallier les principaux inconvénients de la solution connue précitée, à savoir proposer une machine agricole, en particulier mais non limitativement une faucheuse-andaineuse, qui ne compacte pas ou moins le produit, ce sans compromettre sa stabilité, notamment lors des manoeuvres. En outre, cette machine ne devrait, de préférence, pas présenter une largeur, ni une longueur, augmentée lors du transport.

A cet effet, un attribut important de l'invention consiste en ce que, dans une machine agricole telle que présentée en introduction, le dispositif d'essieu est configuré de manière à ce que l'écartement entre roues est réglable, au moins entre une configuration resserrée et une configuration écartée de ces dernières.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1] est une vue schématique de dessus d'une machine agricole, sous la forme d'une faucheuse-andaineuse à titre d'exemple illustratif, avec un dispositif d'essieu et deux unités de traitement selon l'invention ;
[Fig. 2] est une vue en élévation frontale, à une échelle différente, de la machine agricole de la figure 1, les deux unités de traitement étant en position de manoeuvre ;
[Fig. 3] est une vue de dessus, à une échelle différente, de la machine agricole des figures 1 et 2, les deux unités de traitement étant en position de transport ;
[Fig. 4] est une vue de dessus d'un attelage comprenant un tracteur auquel est attelée une autre variante de réalisation de la machine agricole représentée figures 1 à 3, cette machine étant en position de manoeuvre et sur le tracteur étant également attelée une machine frontale ;
[Fig. 5A] et
[Fig. 5B] sont des vues partielles de dessous, à des échelles différentes, du dispositif d'essieu faisant partie de la machine agricole des figures 1 à 3, avec les roues respectivement en position resserrée (5A) et en position écartée (5B) ;
[Fig. 6] est une vue partielle et en coupe, selon un plan vertical comprenant les axes de rotation des roues et les axes longitudinaux des parties mobiles, d'une variante de réalisation du dispositif d'essieu d'une machine agricole telle que représentée figures 1 à 4, avec les roues en configuration écartée (comme sur la figure 5B) ;
[Fig. 7] est une vue de dessus d'une variante de réalisation de la machine agricole représentée sur les figures 1 à 3, dans laquelle l'intervalle entre organes de groupage est plus important, et
[Fig. 8] est une vue de dessus d'une machine agricole du même type que celui des figures 1 à 3 et comprenant un dispositif d'essieu et un dispositif de réglage de l'écartement entre roues en accord avec un autre mode de réalisation de l'invention.

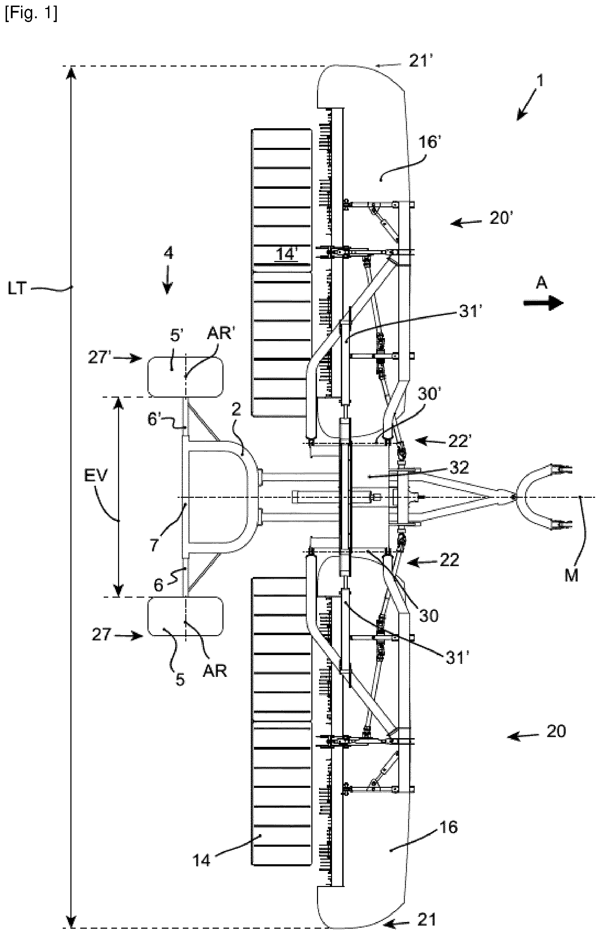

Les figures 1 à 4, 7 et 8 montrent une machine (1) agricole de récolte d'un produit végétal tel que de l'herbe ou analogue. Lors du travail, la machine (1) est déplacée dans une direction d'avance (A). Cette machine (1) trainée comprend un châssis (2) sur lequel est monté un dispositif d'essieu (4) reliant deux roues (5, 5') au châssis (2). Sur le châssis (2) sont aussi montées deux unités de traitement (20, 20') équipées chacune d'un organe de groupage (14, 14'). Chaque unité de traitement (20, 20') est articulée avec le châssis (2) au moins autour d'un axe de pliage (30, 30') de sorte à pouvoir occuper sélectivement une position parmi au moins : une position de travail dans laquelle elle s'étend transversalement à la direction d'avance (A) et repose au moins partiellement sur le sol (S), une position de manoeuvre dans laquelle son poids est entièrement supporté par le châssis (2) et dans laquelle son extrémité extérieure (21, 21') est plus éloignée du châssis (2) que l'extrémité extérieure (27, 27') de chaque roue (5, 5'), et une position de transport dans laquelle elle s'étend transversalement à l'axe de roulement (AR, AR') de la roue (5, 5') respective. Dire qu'une unité de traitement (20, 20') s'étend dans une direction revient à dire dans la présente que sa dimension longitudinale ou principale s'étend dans ladite direction.

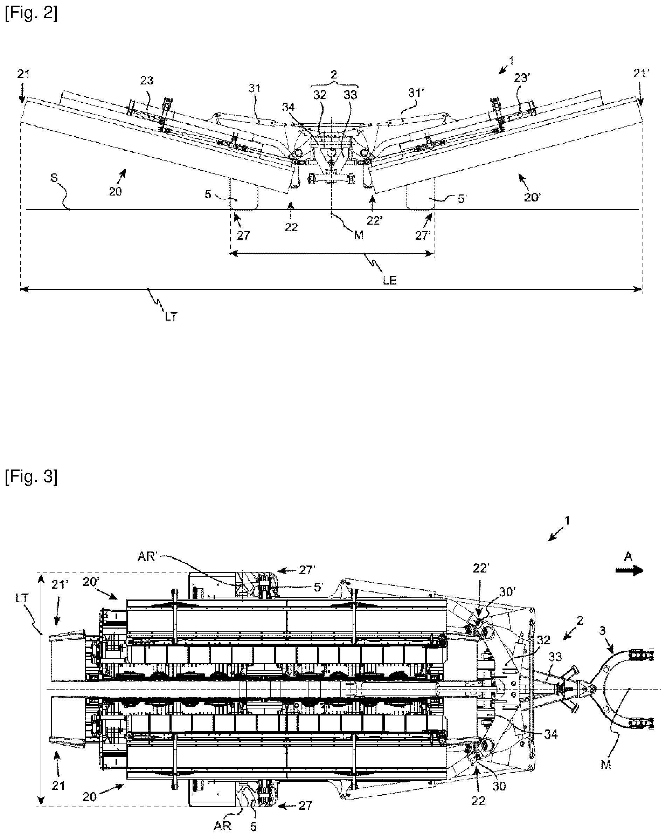

II ressort des figures 1 et 3 que la première unité de traitement (20) et la deuxième unité de traitement (20') sont montées sur le châssis (2) et articulées avec celui-ci autour d'un axe de pliage (30, 30') respectif. Le châssis (2), respectivement la machine (1), est traversée par un plan médian (M) parallèle à la direction d'avance (A). Le plan médian (M) divise ladite machine (1) en deux moitiés sensiblement identiques et constitue ainsi au moins globalement un plan de symétrie. La deuxième unité de traitement (20') est située de l'autre côté du châssis (2), respectivement du plan médian (M), par rapport à la première unité (20). La deuxième unité de traitement (20') est sensiblement identique à la première unité de traitement (20). Elle est montée sur le châssis (2) symétriquement à la première unité de traitement (20) par rapport au plan médian (M). Le châssis (2), respectivement sa dimension longitudinale, s'étend préférentiellement parallèlement à la direction d'avance (A). Chaque roue (5, 5') est pivotante par rapport au châssis (2) autour de son axe de roulement (AR, AR') respectif.

Chaque axe de pliage (30, 30') est transversal à la direction d'avance (A), au moins en position de travail de l'unité de traitement (20, 20') respective. Préférentiellement, chaque axe de pliage (30, 30') est sensiblement parallèle à la direction d'avance (A) en position de travail de l'unité de traitement (20, 20') respective.

Chaque unité de traitement (20, 20') est équipée d'un organe de groupage (14, 14') respectif. L'organe de groupage (14, 14') est destiné à déplacer du produit transversalement à la direction d'avance (A). Chaque organe de groupage (14, 14') est configuré pour déposer le produit sur le sol (S) en un andain longitudinal à la direction d'avance (A). Sur la plupart des machines (1) trainées de ce type, les organes de groupage (14, 14') peuvent déposer le produit sur le sol (S) entre eux, et de préférence entre les roues (5, 5'). On parle dans ce cas de dépose centrale. Sur la figure 1, chaque unité de traitement (20, 20') occupe une position de travail dans laquelle elle s'étend transversalement, et de préférence orthogonalement, à la direction d'avance (A) et repose au moins partiellement sur le sol (S).

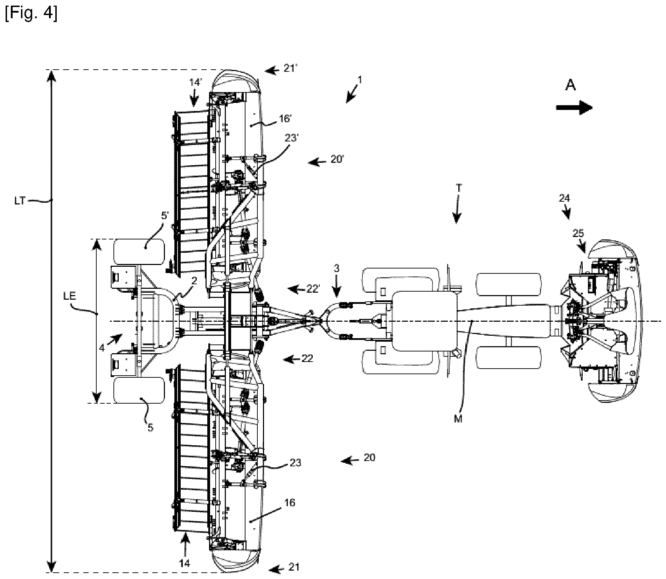

Sur les figures 2 et 4, chaque unité de traitement (20, 20') occupe une position de manoeuvre dans laquelle elle s'étend transversalement à la direction d'avance (A). La position de manoeuvre des unités de traitement (20, 20') permet un déplacement aisé entre deux phases de travail sans perturber les surfaces déjà traitées et en pouvant effectuer des mouvements impossibles dans une position de travail d'une unité (20, 20'). Dans la position de manoeuvre, l'extrémité extérieure (21, 21') d'une unité de traitement (20, 20') est plus éloignée du châssis (2), respectivement du plan médian (M), que l'extrémité extérieure (27, 27') de chaque roue (5, 5'). De plus, dans cette position, le poids de chaque unité de traitement (20, 20') est entièrement supporté par le châssis (2). Autrement dit, l'unité de traitement (20, 20') considérée n'est pas en contact avec le sol (S). Dans la position de manoeuvre, l'extrémité extérieure (21, 21') d'une unité de traitement (20, 20') est de préférence plus éloignée du sol (S) que son extrémité intérieure (22, 22'), augmentant le risque de basculement.

Sur la figure 3, chaque unité de traitement (20, 20') occupe une position de transport dans laquelle elle s'étend transversalement à l'axe de roulement (AR, AR') de la roue (5, 5') respective. Selon une conception simple, les axes de roulement (AR, AR') des deux roues (5, 5') sont orthogonaux à la direction d'avance (A). Les axes de roulement (AR, AR') sont préférentiellement confondus. Dans la position de transport, chaque unité de traitement (20, 20') s'étend préférentiellement parallèlement à la direction d'avance (A), au moins en vue de dessus.

Conformément à l'invention, la machine (1) est caractérisée en ce que le dispositif d'essieu (4) est configuré de manière à ce que l'écartement (EV) entre roues (5, 5') est réglable, au moins entre des configurations resserrée et écartée. Les roues (5, 5') peuvent ainsi occuper sélectivement au moins une configuration resserrée et une configuration écartée. Dans la configuration écartée, l'écartement (EV) entre roues (5, 5') est plus important qu'en configuration resserrée. L'écartement (EV) entre roues (5, 5') se mesure transversalement à la direction d'avance (A), et préférentiellement parallèlement aux axes de roulement (AR, AR') des roues (5, 5').

Le fait qu'en position de manoeuvre d'au moins une unité de traitement (20, 20'), son ou leur poids est entièrement supporté par le châssis (2) et, qu'en sus, l'extrémité extérieure (21, 21') de ladite unité de traitement (20, 20') est plus éloignée du châssis (2) que l'extrémité extérieure (27, 27') de chaque roue (5, 5'), implique que la machine (1) présente un risque augmenté de se renverser. Cet inconvénient n'est pas considéré dans le document EP 2 042 023 précité. Or, grâce à l'augmentation de l'écartement (EV) par déplacement d'au moins une roue (5, 5') par rapport au châssis (2), ce risque est réduit (en position de manoeuvre). On entend par renversement ou basculement, le fait qu'une des roues (5, 5') n'est plus en contact avec le sol (S). Après basculement, la machine (1) prend appui sur une des unités de traitement (20, 20') détériorant ainsi le tapis végétal du sol (S). Le basculement de la machine (1) induit donc un ralentissement du chantier agricole. Il peut aussi causer des dégâts, notamment sur la machine (1), voire des blessures.

En accord avec une première variante constructive de l'invention, la machine (1) comprend au moins un lien (8, 8') intégrant une bielle (9, 9') articulée, d'une part, avec une ou chaque roue (5, 5') et, d'autre part, avec le châssis (2), le réglage de l'écartement (EV) entre roues (5, 5') étant réalisé par pivotement dudit lien (8, 8').

En accord avec une deuxième variante constructive de l'invention, le dispositif d'essieu (4) comprend une partie fixe (7) solidaire du châssis (2), ou intégrée à ce dernier, et au moins une partie mobile (6, 6'), le réglage de l'écartement (EV) entre roues (5, 5') étant réalisé par coulissement de la ou de chaque partie mobile (6, 6') par rapport à la partie fixe (7).

En accord avec une troisième variante constructive de l'invention, la machine (1) comprend au moins un lien (8, 8') pivotant intégrant une bielle (9, 9') articulée et un dispositif d'essieu (4) avec une partie fixe (7) et au moins une partie mobile (6, 6') montée avec faculté de coulissement par rapport à ladite partie fixe (7). Cette troisième variante combine ainsi les moyens des première et deuxième variantes précitées.

En relation avec la deuxième ou la troisième variante précitée, il est avantageusement prévu que chaque roue (5, 5') soit solidaire d'une partie mobile (6, 6') respective du dispositif d'essieu (4), laquelle est reliée de manière coulissante, selon un axe longitudinal (AL, AL') correspondant transversal à la direction d'avance (A), à une partie fixe (7) dudit dispositif d'essieu (4) solidaire du châssis (2), l'écartement (EV) entre les roues (5, 5') étant réglable par coulissement d'au moins une desdites parties mobiles (6, 6') par rapport à ladite partie fixe (7). Cette partie fixe (7) peut aussi constituer un élément appartenant audit châssis (2).

Comme indiqué précédemment, les roues (5, 5') occupent une configuration écartée en position de manoeuvre d'au moins une unité de traitement (20, 20'), permettant avantageusement de diminuer le risque de basculement de la machine (1), notamment en dévers et/ou lors de virages serrés, améliorant ainsi la sécurité d'utilisation de la machine (1).

Les roues (5, 5') occupent également la configuration écartée en position de travail d'au moins une unité de traitement (20, 20'), permettant à la machine (1), respectivement aux organes de groupages (14, 14'), de déposer un plus grand volume de produit entre les roues (5, 5') tout en réduisant le risque que les roues (5, 5') roulent dessus. Le produit est donc moins compacté, ce qui permet un séchage plus rapide et plus uniforme. In fine, la qualité du fourrage est ainsi améliorée. En outre, le produit provenant d'un organe de groupage (14, 14') ne s'entremêle pas ou moins avec celui de l'autre (ou des autres) organe(s) de groupage (14, 14'), ce qui favorise un ramassage aisé par une machine équipée d'un dispositif de ramassage de type connu sous la désignation « pickup ».

En position de transport des unités de traitement (20, 20'), les roues (5, 5') occupent la configuration resserrée de manière à respecter les normes du code de la route.

Du fait de la mise en oeuvre de deux unités de traitement (20, 20'), la largeur de travail de la machine (1) et donc sa productivité sont augmentées. La prévision d'un arrangement des deux unités de traitement (20, 20') avec, en position de travail, un intervalle (I) de séparation entre les organes de groupage (14, 14'), autorise en outre son utilisation dans un attelage agricole présentant également une unité de traitement frontale (24). Un tel attelage avec une machine (1) trainée attelée à l'arrière d'un tracteur (T) auquel est également attelée une unité de traitement frontale (24) est illustré sur la figure 4. Préférentiellement, l'unité de traitement frontale (24) comprend également un organe de groupage central (25) agencé pour déposer du produit entre les roues (5, 5') de la machine (1) trainée. Ainsi qu'il ressort de la figure 4, en configuration écartée des roues (5, 5'), l'écartement (EV) entre roues (5, 5') est sensiblement égale à la largeur du tracteur (T).

Ainsi que représenté sur la figure 4, la machine (1) est conçue pour être trainée par le tracteur (T) dans la direction d'avance (A). A cet effet, elle est reliée au tracteur (T) par un dispositif d'attelage (3), préférentiellement situé à l'avant de la machine (1). En position de travail et de manoeuvre, chaque unité de traitement (20, 20') est située, vue selon la direction d'avance (A), devant les roues (5, 5'). En position de transport (figure 3), les unités de traitement (20, 20') sont situées au-dessus des roues (5, 5'), selon une vue latérale. Pour assurer une bonne stabilité, les roues (5, 5') sont par ailleurs situées de part et d'autre du châssis (2). Les roues (5, 5') sont aussi situées latéralement au-delà du châssis (2), respectivement à distance de part et d'autre du plan médian (M). Les notions « intérieur » et « extérieur » sont à considérer par rapport au châssis (2), respectivement par rapport au plan médian (M). Par rapport à la direction d'avance (A), « intérieur » et « extérieur » sont à considérer latéralement. Dans le présent document, ces notions sont considérées dans la position de travail de l'unité de traitement (20, 20') considérée.

Dans le mode de réalisation préférée, chacune des roues (5, 5') peut être déplacée, selon l'axe de roulement (AR, AR') respectif, d'une distance au moins égale à la moitié de la largeur (L5, L5') de la roue (5, 5') respective. Plus préférentiellement, chaque roue (5, 5') peut être déplacée, selon l'axe de roulement (AR, AR') respectif, d'une distance au moins égale aux trois quarts de la largeur (L5, L5') respective, et plus préférentiellement encore au moins égale à la largeur (L5, L5') de la roue (5, 5') respective.

Dans les positions de travail et de manoeuvre de la machine (1), la largeur totale (LT) de la machine (1) est définie par la distance entre les extrémités extérieures (21, 21') des unités de traitement (20, 20'). Dans la position de transport, la largeur totale (LT) de la machine (1) est avantageusement au plus égale à la distance d'embase (LE) entre les extrémités extérieures (27, 27') des roues (5, 5'). La largeur totale (LT) de la machine (1) est orthogonale à la direction d'avance (A). De préférence, chaque axe de roulement (AR, AR') des roues (5, 5') est parallèle à la largeur totale (LT) de la machine (1). Préférentiellement, en position de manoeuvre ou de travail des unités de traitement (20, 20'), la largeur totale (LT) de la machine (1) est supérieure à 8 mètres, préférentiellement supérieure à 10 mètres, et plus préférentiellement encore supérieure à 12 mètres.

La distance séparant les extrémités extérieures (27, 27') des roues (5, 5') est nommée distance d'embase (LE). Pour assurer une stabilité optimisée avec une construction entrainant une largeur de travail augmentée, il est avantageusement prévu que, en configuration écartée des roues (5, 5') et en position de manoeuvre des unités de traitement (20, 20'), la distance d'embase (LE) soit supérieure au cinquième de la largeur totale (LT) de la machine (1). Préférentiellement, en configuration écartée des roues (5, 5'), la distance d'embase (LE) est supérieure au tiers de la largeur totale (LT), et plus préférentiellement encore supérieure au quart de la largeur totale (LT) de la machine (1).

Il ressort de ce qui précède qu'une seule des deux unités de traitement (20, 20') peut être en position de manoeuvre. Dans ce cas, l'unité de traitement (20, 20') n'étant pas en position de manoeuvre peut être aussi bien en position de travail qu'en position de transport. En effet, avec une seule unité de traitement (20, 20') en position de manoeuvre, la machine (1) est déséquilibrée. Ce déséquilibre est d'autant plus accentué que la largeur totale (LT) de la machine (1) est importante. Sur cette machine (1) trainée avec une seule unité de traitement (20, 20') en position de manoeuvre, le centre de gravité de la machine (1) étant éloigné du plan médian (M) et/ou du châssis (2), selon une direction parallèle à l'axe de roulement (AR, AR') des roues (5, 5'), la machine (1) est moins stable. Ainsi, sur une machine (1) où une seule des deux unités de traitement (20, 20') peut être en position de manoeuvre, il est d'autant plus important d'assurer sa stabilité.

Par ailleurs, sur une telle machine (1) avec au moins une unité de traitement (20, 20') en position de manoeuvre, plus la distance d'embase (LE) est grande, moins la machine (1) aura de risque de se renverser. Ainsi, plus le ratio de la largeur totale (LT) sur la distance d'embase (LE) est bas, plus la machine (1) sera stable avec au moins une unité de traitement (20, 20') en position de manoeuvre. Préférentiellement, en configuration écartée des roues (5, 5') et avec une largeur totale (LT) supérieure à 10 mètres, la distance d'embase (LE) séparant les extrémités extérieures (27, 27') des roues (5, 5') est supérieure à 3 mètres, préférentiellement supérieure à 3,5 mètres, et plus préférentiellement encore supérieure à 4 mètres. Plus spécifiquement, lorsqu'une seule unité de traitement (20, 20') est en position de manoeuvre et que la largeur totale (LT) de la machine (1) est supérieure à 10 mètres, la distance d'embase (LE) séparant les extrémités extérieures (27, 27') des roues (5, 5') est supérieure à 3 mètres.

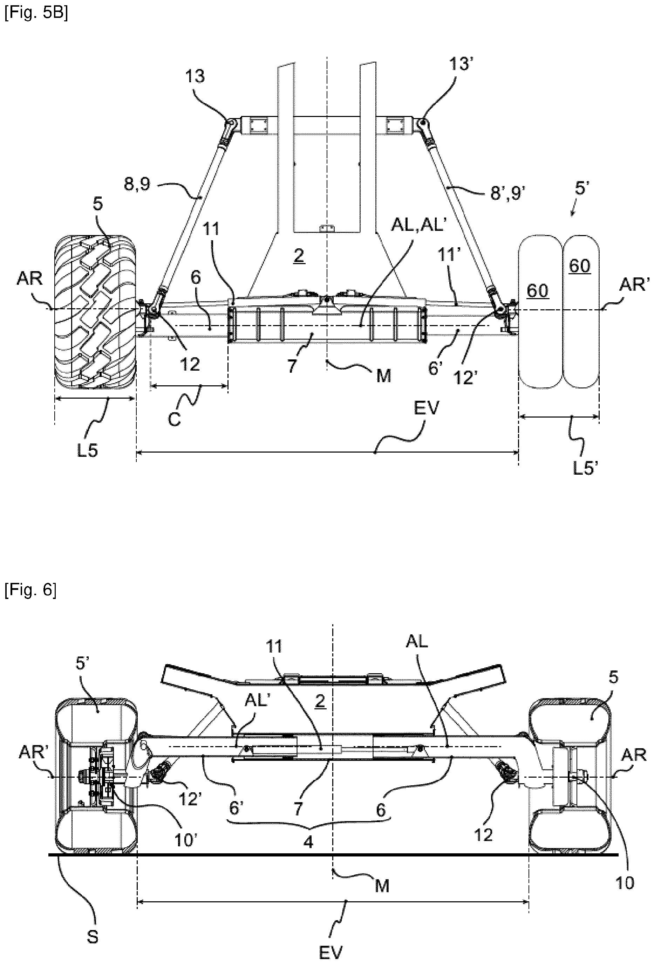

Ainsi que représenté sur la figure 5B, chaque roue (5, 5') présente une largeur (L5, L5') respective. De préférence, les largeurs (L5, L5') des roues (5, 5') sont égales. Chaque roue (5, 5') peut être réalisée d'un seul tenant ou être constituée par l'association de plusieurs roulettes (60) de diamètres égaux et assemblées ensemble. Dans ce cas, on considère que la largeur (L5, L5') d'une roue (5, 5') est le cumul des largeurs des différentes roulettes (60) qui la constituent. La largeur (L5, L5') de chaque roue (5, 5') est liée au poids des unités de traitement (20, 20'). Une largeur (L5, L5') minimale est nécessaire afin de ne pas exercer de pression trop importante sur le sol (S), évitant ainsi de compacter le sol (S) et/ou de détériorer le tapis végétal. On note que la distance d'embase (LE) est égale à la somme de l'écartement (EV) entre roues (5, 5'), de la largeur (L5) de la première roue (5) et de la largeur (L5') de la deuxième roue (5'). En configuration resserrée, la distance d'embase (LE) est inférieure à 4 mètres, plus préférentiellement inférieure à 3,5 mètres, et plus préférentiellement encore inférieure à 3 mètres.

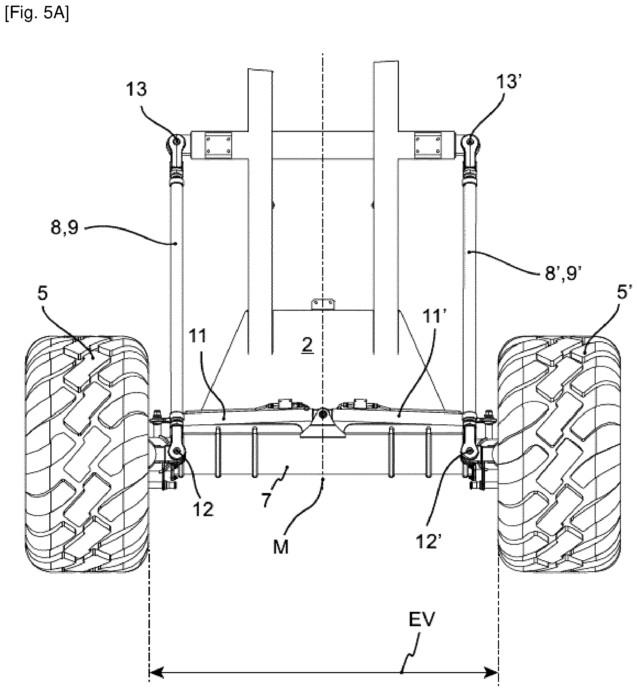

Ainsi qu'il ressort des figures 5A et 5B, le passage de la configuration resserrée à la configuration écartée implique un avancement du ou de chaque axe de rotation des roues (5, 5') par rapport à l'axe longitudinal (AL, AL') correspondant. Du fait du ou des lien(s) (8, 8') entre partie(s) mobile(s) (6, 6') et partie fixe (7), ce passage de la configuration resserrée à la configuration écartée implique également un abaissement du ou de chaque axe longitudinale (AL, AL'). Il ressort de ce qui précède que le châssis (2) est plus bas en configuration écartée qu'en configuration resserrée. La machine (1) présente ainsi davantage encore de stabilité en configuration écartée. En position de manoeuvre, l'écartement (EV) entre roues (5, 5') étant réglé en configuration écartée, le centre de gravité de la machine (1) est plus bas en position de manoeuvre qu'en position de transport. La machine (1) est ainsi d'autant plus stable dans la position de manoeuvre.

Pour permettre que le volume de produit regroupé entre les roues (5, 5') soit plus important sans compacter l'andain, il est avantageusement prévu que, en configuration écartée des roues (5, 5'), l'écartement (EV) entre roues (5, 5') soit supérieur au sixième de la largeur totale (LT) de la machine (1). Préférentiellement, en configuration écartée des roues (5, 5'), l'écartement (EV) entre roues (5, 5') est supérieur au quart de la largeur totale (LT), et plus préférentiellement encore supérieure au tiers de la largeur totale (LT) de la machine (1). Ainsi qu'il ressort de la figure 4, en configuration écartée des roues (5, 5'), l'écartement (EV) entre roues (5, 5') est sensiblement égale à la distance entre les roues du tracteur (T).

En accord avec un mode de réalisation de l'invention, et comme cela ressort notamment des figures 5, 6 et 7, la machine (1) comprend au moins un actionneur (11, 11') de commande du réglage, configuré pour régler l'écartement (EV) entre les deux roues (5, 5'). Bien entendu, le ou chaque actionneur (11, 11') de réglage influe sur la distance d'embase (LE) séparant les extrémités (ou faces) extérieures (27, 27') desdites roues (5, 5'). Tel qu'illustré, le ou chaque actionneur (11, 11') de réglage est réalisé par au moins un vérin, préférentiellement translatif et hydraulique. Afin d'éviter de détériorer le tapis végétal, le ou chaque actionneur (11, 11') de réglage est actionné lors de l'avance de la machine (1). Aussi, le ou chaque actionneur (11, 11') de réglage est préférentiellement pilotable depuis le tracteur (T).

Dans le mode de réalisation représenté sur la figure 6, un seul actionneur (11) de réglage est solidarisé avec chacune des roues (5, 5'), respectivement relie les deux parties mobiles (6, 6'). Dans le mode de réalisation préféré (figures 5), la machine (1) comporte deux actionneurs (11, 11') de réglage. Chacun des actionneurs (11, 11') de réglage est solidarisé avec la partie mobile (6, 6') correspondante d'une part, et avec le châssis (2), respectivement la partie fixe (7), d'autre part.

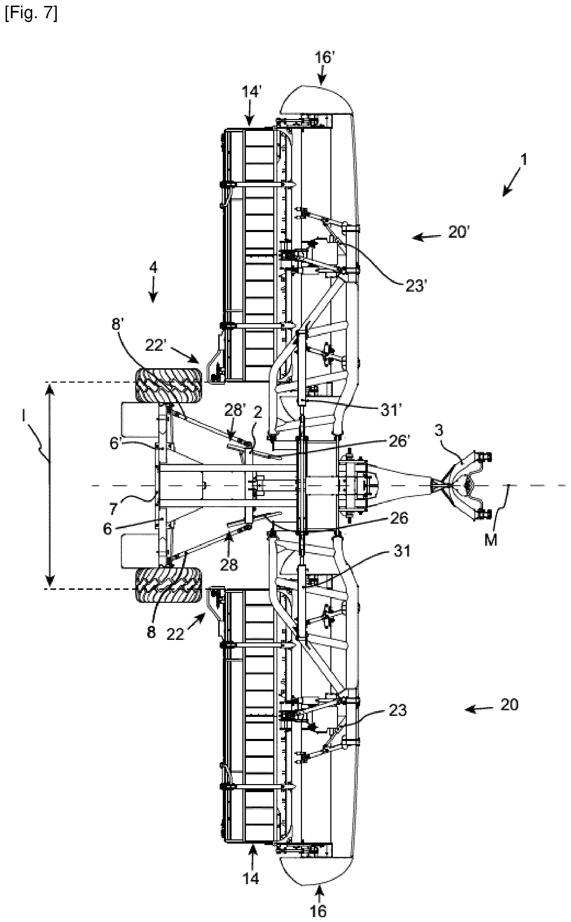

Ainsi qu'il est visible sur la figure 7, l'intervalle (I) est la distance séparant les deux organes de groupage (14, 14'). La machine (1) comprend au moins un actionneur (23, 23') de commande du réglage de l'intervalle (I) entre les deux organes de groupage (14, 14'). De préférence, chaque unité de traitement (20, 20') comporte un actionneur transversal (23, 23') propre. Le réglage de l'intervalle (I) entre les organes de groupage (14, 14') est préférentiellement réalisé indépendamment du réglage de l'écartement (EV) entre roues (5, 5'). A titre d'exemple, le réglage de l'intervalle (I) de séparation entre les organes de groupage (14, 14') peut varier entre 2 et 4 mètres.

Il ressort également de cette figure 7 que la machine (1) peut comporter deux tôles déflectrices (26, 26') solidaires du châssis (2), permettant d'éviter davantage l'entremêlement des andains. Chacune est de préférence associée à l'organe de groupage (14, 14') d'une unité de traitement (20, 20'). Chaque tôle déflectrice (26, 26') s'étend sensiblement orthogonalement au sol (S). Chaque tôle déflectrice (26, 26') est orientée dans la direction d'avance (A). De préférence, l'extrémité arrière (28, 28') de chaque tôle déflectrice (26, 26') est plus éloignée du plan médian (M) que l'extrémité avant de la tôle déflectrice (26, 26') concernée, en vue de dessus. Chaque tôle déflectrice (26, 26') forme ainsi de préférence un angle avec le plan médian (M) compris entre 10° et 30°. L'extrémité arrière (28, 28') de chaque tôle déflectrice (26, 26') se situe entre l'extrémité intérieure de l'organe de groupage (14, 14') respectif et le plan médian (M), en vue de dessus et en position de travail de l'unité de traitement (20, 20') concernée. Une telle orientation permet aux tôles déflectrices (26, 26') de déposer le produit de part et d'autre du produit déposé par l'organe de groupage central (25) de la machine frontale (24) et en évitant ainsi les interférences entre les différents andains, les tôles précitées participent à la formation d'un andain plus large et plus aéré.

Chaque unité de traitement (20, 20') est également équipée d'un organe de récolte (16, 16') respectif situé devant l'organe de groupage (14, 14') associé, au moins dans la position travail de l'unité de traitement (20, 20') considérée. Dans le cas d'une faucheuse-andaineuse, chaque organe de récolte (16, 16') est un organe de fauche destiné à faucher le produit sur pied. Alternativement ou additionnellement, chaque unité de traitement (20, 20') peut être équipée d'un rouleau muni de doigts en périphérie, comme par exemple un conditionneur monté entre l'organe de fauche et l'organe de groupage (14, 14'). Dans le cas d'une machine (1) trainée de type andaineuse (non représenté), le rouleau est un moyen de ramassage du produit au sol (S) disposé à l'avant de l'organe de groupage (14, 14') associé.

Comme le montre la figure 6, dans le mode de réalisation préféré, le dispositif d'essieu (4) reliant les deux roues (5, 5') au châssis (2) est un essieu télescopique. Préférentiellement, chaque roue (5, 5') est solidaire d'une partie mobile (6, 6') qui est reliée de manière coulissante selon un axe longitudinal (AL, AL') respectif transversal à la direction d'avance (A), à une partie fixe (7) solidaire du châssis (2). De préférence, chaque roue (5, 5') est solidaire de la partie mobile (6, 6') correspondante par l'intermédiaire d'un moyeu (10,10') respectif d'axe de roulement (AR, AR') correspondant. L'écartement (EV) entre roues (5, 5') est réglable par coulissement, par rapport à la partie fixe (7), d'au moins une partie mobile (6, 6'), et de préférence des deux, selon l'axe longitudinal (AL, AL') associé. Au moins en configuration écartée, les axes longitudinaux (AL, AL') sont situés au-dessus des axes (AR, AR') de moyeux (10,10') de sorte à augmenter la surface délimitée par le sol (S), les roues (5, 5') et le dispositif d'essieu (4), permettant de diminuer le compactage du produit déposé au sol (S). De préférence, les axes longitudinaux (AL, AL') des parties mobiles (6, 6') sont mutuellement alignés. Les axes longitudinaux (AL, AL') sont, dans le mode de réalisation préféré, parallèles aux axes de roulement (AR, AR') des roues (5, 5').

Une telle construction du dispositif d'essieu (4), simple et résistante aux contraintes, permet de conserver un diamètre et une largeur de roues (5, 5') raisonnables tout en autorisant un dépôt de produit plus volumineux, mais sans être tassé ou compacté.

Selon le mode de réalisation préféré, chaque partie mobile (6, 6'), avec son axe longitudinal (AL, AL') correspondant, est en outre reliée mécaniquement au châssis (2) par un lien (8, 8') respectif, chacun desdits liens (8, 8') étant articulé, d'une part, avec la partie mobile (6, 6') par une première articulation (12, 12') et, d'autre part, avec le châssis (2) par une deuxième articulation (13, 13').

Dans un mode de réalisation alternatif non représenté, le ou chaque lien (8, 8') comprend un actionneur, par exemple de type vérin hydraulique, en plus de l'actionneur (11, 11') de réglage, et qui est configuré pour faire pivoter la partie mobile (6, 6') correspondante autour de l'axe longitudinal (AL, AL') correspondant, de manière à faire avancer l'axe de roulement (AR, AR') respectif et/ou de manière à faire descendre l'axe longitudinal (AL, AL') respectif.

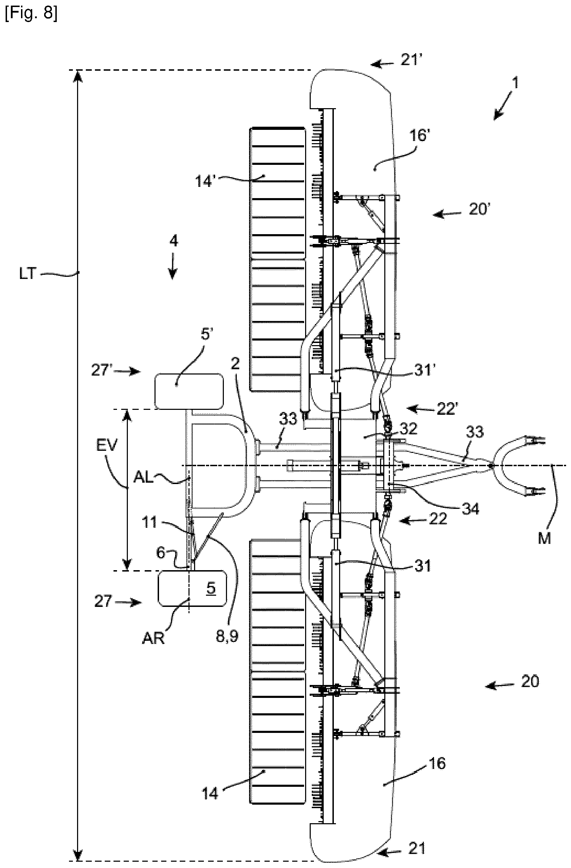

Chaque lien (8, 8') étant solidaire de la partie mobile (6, 6') correspondante, on note que, dans un mode de réalisation alternatif représenté sur la figure 8, le ou chaque actionneur (11, 11') de réglage peut aussi, d'une part, être articulé avec le lien (8, 8') de manière à être solidarisé avec la roue (5, 5'), et être solidarisé avec le châssis (2) d'autre part.

Un dispositif d'essieu (4) présentant les caractéristiques précitées est décrit plus en détail dans la demande de brevet français déposée ce jour sous le numéro FR2009860, dont le contenu est intégré à la présente par référence.

Selon une variante de réalisation préférée de l'invention, les deux roues (5, 5') sont écartées simultanément et symétriquement (avec la même amplitude) dès qu'une unité de traitement (20, 20') passe de la position de transport à une autre position (de manoeuvre ou de travail). Le passage de la position de transport à l'une parmi les positions de manoeuvre et de travail de chaque unité de traitement (20, 20') peut être détecté par un capteur de position du ou de chaque actionneur (11, 11') de réglage, ou encore par un capteur de position entre chaque unité de traitement (20, 20') et le châssis (2).

Dans le mode de réalisation préféré, le châssis (2) comporte un basculeur (32) articulé avec une poutre centrale (33) autour d'un axe d'élévation (34). L'axe d'élévation (34) est parallèle aux axes de roulement (AR, AR') des roues (5, 5'). La poutre centrale (33) fait ainsi partie du châssis (2). Chaque unité de traitement (20, 20') est articulée au basculeur (32) autour d'un axe de pliage (30, 30') respectif. En position transport, le basculeur (32) est orienté verticalement. Ainsi qu'il ressort de la figure 3, les axes de pliages (30, 30') sont aussi orientés verticalement en position de transport des unités de traitement (20, 20'). Afin de passer une unité de traitement (20, 20') de la position de transport à la position de manoeuvre et/ou de travail, le basculeur (32) est pivoté par rapport à la poutre centrale (33) d'une position verticale à une position horizontale autour de l'axe d'élévation (34).

De plus, un actionneur de pliage (31, 31') est associé à chaque unité de traitement (20, 20') et est configuré pour la faire pivoter autour de l'axe de pliage (30, 30') respectif. L'actionneur de pliage (31, 31') permet ainsi de transposer une unité de traitement (20, 20') au moins entre position de travail et position de manoeuvre. En position de travail, le ou chaque actionneur de pliage (31, 31') est configuré pour autoriser chaque unité de traitement (20, 20') à pivoter par rapport au châssis (2) autour de l'axe de pliage (30, 30') respectif, en fonction des dénivellations du sol (S). Chaque actionneur de pliage (31, 31') est fixé, d'une part, sur l'unité de traitement (20, 20') correspondante, et d'autre part sur le châssis (2), respectivement sur le basculeur (32).

Dans un mode de réalisation simple, pour transposer une unité de traitement (20, 20') depuis sa position de travail en position de manoeuvre, ladite unité de traitement (20, 20') est pivotée vers le haut autour de l'axe de pliage (30, 30') respectif, de préférence selon un angle compris entre 5° et 40°. Et, pour la transposer depuis sa position de manoeuvre en position de transport, l'unité de traitement (20, 20') considérée continue son pivotement autour de l'axe de pliage (30, 30') jusqu'à atteindre une position où elle est orientée sensiblement perpendiculairement au sol (S). Dans ce mode de réalisation, pour transposer une unité de traitement (20, 20') depuis sa position de transport en position de travail, les pivotements précités sont réalisés en sens inverse. Dans ce mode de réalisation cependant, avec des unités de traitement (20, 20') de dimensions longitudinales importantes, toutes les normes du code de la route ne sont cependant pas forcément respectées, notamment les normes concernant la hauteur de la machine (1) au transport.

Selon un autre mode de réalisation représenté sur la figure 8, il peut être prévu qu'une seule des roues (5, 5') soit écartée du châssis (2), respectivement du plan médian (M), en configuration écartée. La même roue (5 ou 5') peut être écartée du châssis (2) quelle que soit l'unité de traitement (20, 20') en position de manoeuvre ou de travail. Alternativement il peut être prévu que, dès lors qu'une unité de traitement (20, 20') est en position de manoeuvre, la roue (5, 5') la plus proche de l'unité en position de manoeuvre soit écartée du plan médian (M).

Néanmoins, afin d'assurer une meilleure stabilité dans une majorité de cas de figures, dans le mode de réalisation préféré, chacune des roues (5, 5') est à la même distance du châssis (2) en configuration écartée des roues (5, 5'). De préférence, en configuration écartée, chacune des roues (5, 5') est à la même distance du plan médian (M).

L'invention a également pour objet un procédé de mise en oeuvre d'une machine (1) agricole trainée de récolte d'un produit végétal tel que de l'herbe, ladite machine comprenant un châssis (2) sur lequel sont montés un dispositif d'essieu (4) reliant deux roues (5, 5') au châssis (2), et deux unités de traitement (20, 20') équipées d'un organe de groupage (14, 14') respectif.

Chaque unité de traitement (20, 20') est articulée avec le châssis (2) au moins autour d'un axe de pliage (30, 30') de sorte à pouvoir occuper sélectivement au moins : une position de travail dans laquelle elle s'étend transversalement à une direction d'avance (A) et repose au moins partiellement sur le sol (S), une position de manoeuvre dans laquelle son poids est entièrement supporté par le châssis (2) et dans laquelle son extrémité extérieure (21, 21') est plus éloignée du châssis (2) que l'extrémité extérieure (27, 27') de chaque roue (5, 5'), et une position transport dans laquelle elle s'étend sensiblement transversalement à l'axe de roulement (AR, AR') de la roue (5, 5') respective.

Ledit procédé consiste, dès qu'au moins une unité de traitement (20, 20') est transposée en position de manoeuvre, à écarter les roues (5, 5') l'une de l'autre, notamment en les faisant passer d'une configuration resserrée à une configuration écartée. Autrement dit, dès qu'au moins une unité de traitement (20, 20') est transposée en position de manoeuvre, l'écartement (EV) entre roues (5, 5') est réglé dans la configuration écartée des roues (5, 5'), éventuellement automatiquement. Un tel procédé permet d'assurer la stabilité de la machine (1), dès lors qu'un risque de basculement est présent. Un passage entre les configurations resserrée et écartée, automatiquement commandé lorsqu'au moins une unité de traitement (20, 20') est transposée en position de manoeuvre, présente l'avantage d'assurer la sécurité d'utilisation de la machine (1) si le conducteur venait à oublier de régler l'écartement (EV) des roues (5, 5') et permet d'éviter une action supplémentaire.

Le procédé de mise en oeuvre de la machine (1) consiste également à régler automatiquement l'écartement (EV) entre roues (5, 5') en configuration écartée, dès qu'au moins une unité de traitement (20, 20') est transposée en position de travail. Le procédé de mise en oeuvre de la machine (1) consiste également à régler automatiquement l'écartement (EV) entre roues (5, 5') en configuration écartée, dès que les deux unités de traitement (20, 20') sont en position de travail ou de manoeuvre.

Inversement, le procédé de mise en oeuvre de la machine (1) consiste également à régler automatiquement l'écartement (EV) entre roues (5, 5') en configuration resserrée, dès que les deux unités de traitement (20, 20') sont en position de transport. Un passage entre la configuration écartée à la configuration resserrée, et plus généralement un réglage (automatique) en configuration resserrée, est automatiquement commandé lorsque les deux unités de traitement (20, 20') sont en position de transport, présente l'avantage d'assurer que la machine (1) présente une largeur réduite assurant la sécurité d'utilisation de la machine (1) si le conducteur venait à oublier de régler l'écartement (EV) des roues (5, 5'), et permet aussi d'éviter une action supplémentaire.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection des revendications.

## Revendications

1. Machine (1) agricole trainée de récolte d'un produit végétal tel que de l'herbe, ladite machine comprenant un châssis (2) sur lequel sont montés, d'une part, un dispositif d'essieu (4) reliant deux roues (5, 5') au châssis (2), et, d'autre part, deux unités de traitement (20, 20') équipées chacune d'un organe de groupage (14, 14') respectif, chaque unité de traitement (20, 20') étant articulée avec le châssis (2) au moins autour d'un axe de pliage (30, 30') de sorte à pouvoir occuper sélectivement au moins i) une position de travail dans laquelle elle s'étend transversalement à une direction d'avance (A) et repose au moins partiellement sur le sol (S), ii) une position de manoeuvre dans laquelle son poids est entièrement supporté par le châssis (2) et dans laquelle son extrémité extérieure (21, 21') est plus éloignée du châssis (2) que l'extrémité extérieure (27, 27') de chaque roue (5, 5'), et iii) une position de transport dans laquelle elle s'étend transversalement à l'axe de roulement (AR, AR') de la roue (5, 5') respective,
machine (1) agricole **caractérisée en ce que** le dispositif d'essieu (4) est configuré de manière à ce que l'écartement (EV) entre roues (5, 5') est réglable, au moins entre une configuration resserrée et une configuration écartée, et
**en ce que** les roues (5, 5') occupent la configuration écartée en position de manoeuvre et en position de travail d'au moins une unité de traitement (20, 20').

2. Machine agricole selon la revendication 1, **caractérisée en ce qu'**elle comprend au moins un lien (8, 8') intégrant une bielle (9, 9') articulée, d'une part, avec une ou chaque roue (5, 5') et, d'autre part, avec le châssis (2,), le réglage de l'écartement (EV) entre roues (5, 5') étant réalisé par pivotement dudit lien (8, 8').

3. Machine agricole selon la revendication 1, **caractérisée en ce que** le dispositif d'essieu (4) comprend une partie fixe (7) solidaire du châssis (2), ou intégrée à ce dernier, et au moins une partie mobile (6, 6'), le réglage de l'écartement (EV) entre roues (5, 5') étant réalisé par coulissement de la ou d'au moins une partie mobile (6, 6') par rapport à la partie fixe (7).

4. Machine selon la revendication 2 ou 3, **caractérisée en ce qu'**elle comprend au moins un lien (8, 8') pivotant intégrant une bielle (9, 9') articulée et un dispositif d'essieu (4) avec une partie fixe (7) et au moins une partie mobile (6, 6') montée avec faculté de coulissement par rapport à ladite partie fixe (7).

5. Machine agricole selon l'une quelconque des revendications 1 à 4, **caractérisée en ce que**, en configuration écartée des roues (5, 5'), chacune des roues (5, 5') est située à la même distance du châssis (2), préférentiellement d'un plan médian (M) de la machine (1).

6. Machine agricole selon l'une quelconque des revendications 1 à 5, **caractérisée en ce que** le châssis (2) est plus bas en configuration écartée qu'en configuration resserrée.

7. Machine agricole selon l'une quelconque des revendications 1 à 6, **caractérisée en ce que**, en configuration écartée des roues (5, 5') et en position de manoeuvre des deux unités de traitement (20, 20'), la distance d'embase (LE) qui correspond à la distance séparant les extrémités extérieures (27 et 27') respectives des deux roues (5 et 5') est supérieure au cinquième de la largeur totale (LT) de la machine (1), qui correspond à la distance séparant les deux extrémités extérieures opposées (21 et 21') desdites unités de traitement (20, 20').

8. Machine agricole selon l'une quelconque des revendications 1 à 7, **caractérisée en ce que**, en position de manoeuvre ou de travail des unités de traitement (20, 20'), la distance séparant les deux extrémités extérieures opposées (21 et 21') desdites unités de traitement (20, 20'), ou largeur totale (LT) de la machine (1), est supérieure à 8 mètres, préférentiellement supérieure à 10 mètres, et plus préférentiellement encore supérieure à 12 mètres.

9. Machine agricole selon l'une quelconque des revendications 1 à 8, **caractérisée en ce que**, lorsqu'une seule unité de traitement (20, 20') est en position de manoeuvre et que la largeur totale (LT) de la machine (1) est supérieure à 10 mètres, la distance d'embase (LE) séparant les extrémités extérieures (27, 27') des roues (5, 5') est supérieure à 3 mètres.

10. Machine agricole selon l'une quelconque des revendications 1 à 9, **caractérisée en ce qu'**elle comprend au moins un actionneur (23, 23') de commande du réglage de l'intervalle (I) entre les deux organes de groupage (14, 14').

11. Machine agricole selon l'une quelconque des revendications 1 à 10, **caractérisée en ce qu'**à chaque organe de groupage (14, 14') de chaque unité de traitement (20, 20') est associé une tôle déflectrice (26, 26') fixée sur le châssis (2) et orientée sensiblement selon la direction d'avance (A) de la machine (1) en déplacement.

12. Machine agricole selon l'une quelconque des revendications 1 à 11, **caractérisée en ce que** chaque roue (5, 5') est solidaire d'une partie mobile (6, 6') du dispositif d'essieu (4), laquelle est reliée de manière coulissante, selon un axe longitudinal (AL, AL') correspondant transversal à la direction d'avance (A), à une partie fixe (7) dudit dispositif d'essieu (4) solidaire du châssis (2), l'écartement (EV) entre les roues (5, 5') étant réglable par coulissement d'au moins une desdites parties mobiles (6, 6') par rapport à ladite partie fixe (7).

13. Procédé de mise en oeuvre d'une machine (1) agricole trainée de récolte d'un produit végétal tel que de l'herbe, ladite machine comprenant un châssis (2) sur lequel sont montés un dispositif d'essieu (4) reliant deux roues (5, 5') audit châssis (2), et deux unités de traitement (20, 20') équipées chacune d'un organe de groupage (14, 14') respectif, chaque unité de traitement (20, 20') étant articulée avec le châssis (2) au moins autour d'un axe de pliage (30, 30') de sorte à pouvoir occuper sélectivement au moins : i) une position de travail dans laquelle elle s'étend transversalement à la direction d'avance (A) et repose au moins partiellement sur le sol (S), ii) une position de manoeuvre dans laquelle son extrémité extérieure (21, 21') est plus éloignée du châssis (2) que l'extrémité extérieure (27, 27') de chaque roue (5, 5'), et iii) une position transport dans laquelle elle s'étend sensiblement transversalement à l'axe de roulement (AR, AR') de la roue (5, 5') respective, ledit procédé étant **caractérisé en ce qu'**il consiste à fournir un dispositif d'essieu (4) configuré de manière à ce que l'écartement (EV) entre roues (5, 5') soit réglable, au moins entre une configuration resserrée et une configuration écartée, et, dès qu'au moins une unité de traitement (20, 20') est en position de manoeuvre ou en position de travail, à écarter d'avantage les roues (5, 5') l'une de l'autre, en les faisant passer en configuration écartée.

14. Procédé de mise en oeuvre d'une machine (1) selon la revendication 13, **caractérisé en ce que** l'écartement (EV) entre roues (5, 5') est réglé automatiquement dans la configuration écartée des roues (5, 5') dès qu'au moins une unité de traitement (20, 20') est transposée en position de travail.

15. Procédé de mise en oeuvre d'une machine (1) selon l'une des revendication 13 ou 14, **caractérisé en ce que** l'écartement (EV) entre roues (5, 5') est réglé automatiquement en configuration resserrée, dès que les deux unités de traitement (20, 20') sont en position de transport. 1

## Patentansprüche

1. Gezogene landwirtschaftliche Maschine (1) zum Ernten eines pflanzlichen Produkts, wie etwa Gras, wobei die Maschine einen Rahmen (2) umfasst, auf dem einerseits eine Achsvorrichtung (4), die zwei Räder (5, 5') mit dem Rahmen (2) verbindet, und andererseits zwei Verarbeitungseinheiten (20, 20'), die jeweils mit einem jeweiligen Sammelelement (14, 14') ausgestattet sind, montiert sind, wobei jede Verarbeitungseinheit (20, 20') mit dem Rahmen (2) zumindest um eine Faltachse (30, 30') angelenkt ist, so dass sie wahlweise zumindest i) eine Arbeitsstellung, in der sie sich quer zu einer Vorschubrichtung (A) erstreckt und zumindest teilweise auf dem Boden (S) aufliegt, ii) eine Manövrierstellung, in der ihr Gewicht vollständig vom Rahmen (2) getragen wird und in der ihr Außenende (21, 21') vom Rahmen (2) weiter entfernt ist als das Außenende (27, 27') jedes Rades (5, 5') und iii) eine Transportstellung, in der sie sich quer zur Laufachse (AR, AR') des jeweiligen Rades (5, 5') erstreckt, einnehmen kann,
landwirtschaftliche Maschine (1), die **dadurch gekennzeichnet ist, dass** die Achsvorrichtung (4) so ausgestaltet ist, dass der Abstand (EV) zwischen den Rädern (5, 5') zumindest zwischen einer zusammengezogenen Konfiguration und einer auseinandergezogenen Konfiguration verstellbar ist, und
dadurch dass die Räder (5, 5') die auseinandergezogene Konfiguration in der Manövrierstellung und in der Arbeitsstellung mindestens einer Verarbeitungseinheit (20, 20') einnehmen.

2. Landwirtschaftliche Maschine nach Anspruch 1, **dadurch gekennzeichnet, dass** sie mindestens eine Verbindung (8, 8') umfasst, die eine Stange (9, 9') einschließt, die einerseits an einem oder jedem Rad (5, 5') und andererseits an dem Rahmen (2) angelenkt ist, wobei die Einstellung des Abstands (EV) zwischen den Rädern (5, 5') durch Schwenken der Verbindung (8, 8') erfolgt.

3. Landwirtschaftliche Maschine nach Anspruch 1, **dadurch gekennzeichnet, dass** die Achsvorrichtung (4) einen festen Teil (7), der fest mit dem Rahmen (2) verbunden oder in diesen integriert ist, und mindestens einen beweglichen Teil (6, 6') umfasst, wobei die Einstellung des Abstands (EV) zwischen den Rädern (5, 5') durch Gleiten des oder mindestens eines beweglichen Teils (6, 6') in Bezug auf den festen Teil (7) erfolgt.

4. Maschine nach Anspruch 2 oder 3, **dadurch gekennzeichnet, dass** sie mindestens eine schwenkbare Verbindung (8, 8') umfasst, die eine Anlenkstange (9, 9') und eine Achsvorrichtung (4) mit einem festen Teil (7) und mindestens einem beweglichen Teil (6, 6'), der in Bezug auf den festen Teil (7) gleitfähig montiert ist, einschließt.

5. Landwirtschaftliche Maschine nach irgendeinem der Ansprüche 1 bis 4, **dadurch gekennzeichnet, dass** in der auseinandergezogenen Konfiguration der Räder (5, 5') jedes der Räder (5, 5') im gleichen Abstand vom Rahmen (2), vorzugsweise von einer Mittelebene (M) der Maschine (1), angeordnet ist.

6. Landwirtschaftliche Maschine nach irgendeinem der Ansprüche 1 bis 5, **dadurch gekennzeichnet, dass** der Rahmen (2) in der auseinandergezogenen Konfiguration niedriger ist als in der zusammengezogenen Konfiguration.

7. Landwirtschaftliche Maschine nach irgendeinem der Ansprüche 1 bis 6, **dadurch gekennzeichnet, dass** in einer auseinandergezogenen Konfiguration der Räder (5, 5') und in Manövrierstellung der beiden Verarbeitungseinheiten (20, 20') der Grundabstand (LE), der dem Abstand zwischen den jeweiligen Außenenden (27 und 27') der beiden Räder (5 und 5') entspricht, größer als ein Fünftel der Gesamtbreite (LT) der Maschine (1) ist, die dem Abstand zwischen den beiden gegenüberliegenden Außenenden (21 und 21') der Verarbeitungseinheiten (20, 20') entspricht.

8. Landwirtschaftliche Maschine nach irgendeinem der Ansprüche 1 bis 7, **dadurch gekennzeichnet, dass** in der Manövrier- oder Arbeitsstellung der Verarbeitungseinheiten (20, 20') der Abstand zwischen den beiden gegenüberliegenden Außenenden (21 und 21') der Verarbeitungseinheiten (20, 20') oder die Gesamtbreite (LT) der Maschine (1) mehr als 8 Meter, vorzugsweise mehr als 10 Meter und besonders bevorzugt mehr als 12 Meter beträgt.

9. Landwirtschaftliche Maschine nach irgendeinem der Ansprüche 1 bis 8, **dadurch gekennzeichnet, dass**, wenn sich nur eine Verarbeitungseinheit (20, 20') in der Manövrierstellung befindet und die Gesamtbreite (LT) der Maschine (1) mehr als 10 Meter beträgt, der Grundabstand (LE), der die Außenenden (27, 27') der Räder (5, 5') voneinander trennt, größer als 3 Meter ist.

10. Landwirtschaftliche Maschine nach irgendeinem der Ansprüche 1 bis 9, **dadurch gekennzeichnet, dass** sie mindestens einen Queraktuator (23, 23') zur Steuerung der Einstellung des Abstands (I) zwischen den beiden Sammelelementen (14, 14') umfasst.

11. Landwirtschaftliche Maschine nach irgendeinem der Ansprüche 1 bis 10, **dadurch gekennzeichnet, dass** jedem Sammelelement (14, 14') jeder Verarbeitungseinheit (20, 20') ein Ablenkblech (26, 26') zugehörig ist, das am Rahmen (2) befestigt und im Wesentlichen gemäß der Vorschubrichtung (A) der sich bewegenden Maschine (1) ausgerichtet ist.

12. Landwirtschaftliche Maschine nach irgendeinem der Ansprüche 1 bis 11, **dadurch gekennzeichnet, dass** jedes Rad (5, 5') fest mit einem beweglichen Teil (6, 6') der Achsvorrichtung (4) verbunden ist, der gemäß einer entsprechenden zu der Vorschubrichtung (A) quer verlaufenden Längsachse (AL, AL') gleitend mit einem festen Teil (7) der Achsvorrichtung (4) verbunden ist, der fest mit dem Rahmen (2) verbunden ist, wobei der Abstand (EV) zwischen den Rädern (5, 5') durch Gleiten mindestens eines der beweglichen Teile (6, 6') in Bezug auf den festen Teil (7) verstellbar ist.

13. Verfahren zum Einsatz einer gezogenen landwirtschaftlichen Maschine (1) zum Ernten eines pflanzlichen Produkts wie Gras, wobei die Maschine einen Rahmen (2) umfasst, an dem eine Achsvorrichtung (4), die zwei Räder (5, 5') mit dem Rahmen (2) verbindet, und zwei Verarbeitungseinheiten (20, 20'), die jeweils mit einem jeweiligen Sammelelement (14, 14') ausgestattet sind, angebracht sind, wobei jede Verarbeitungseinheit (20, 20') mit dem Rahmen (2) zumindest um eine Faltachse (30, 30') angelenkt ist, so dass sie wahlweise zumindest: i) eine Arbeitsstellung, in der sie sich quer zur Vorschubrichtung (A) erstreckt und zumindest teilweise auf dem Boden (S) aufliegt, ii) eine Manövrierstellung, in der ihr Außenende (21, 21') vom Rahmen (2) weiter entfernt ist als das Außenende (27, 27') jedes Rades (5, 5') und iii) eine Transportstellung, in der sie sich im Wesentlichen quer zur Laufachse (AR, AR') des jeweiligen Rades (5, 5') erstreckt, einnehmen kann, wobei das Verfahren **dadurch gekennzeichnet ist, dass** es darin besteht, eine Achsvorrichtung (4) bereitzustellen, die so ausgestaltet ist, dass der Abstand (EV) zwischen den Rädern (5, 5') zumindest zwischen einer zusammengezogenen Konfiguration und einer auseinandergezogenen Konfiguration verstellbar ist, und sobald sich mindestens eine Verarbeitungseinheit (20, 20') in Manövrier- oder Arbeitsstellung befindet, die Räder (5, 5') noch weiter voneinander zu entfernen, indem sie in die auseinandergezogene Konfiguration gebracht werden.

14. Verfahren zum Einsatz einer Maschine (1) nach Anspruch 13, **dadurch gekennzeichnet, dass** der Abstand (EV) zwischen den Rädern (5, 5') in der auseinandergezogenen Konfiguration der Räder (5, 5') automatisch eingestellt wird, sobald mindestens eine Verarbeitungseinheit (20, 20') in die Arbeitsstellung umgestellt wird.

15. Verfahren zum Einsatz einer Maschine (1) nach einem der Ansprüche 13 oder 14, **dadurch gekennzeichnet, dass** der Abstand (EV) zwischen den Rädern (5, 5') in der zusammengezogenen Konfiguration automatisch eingestellt wird, sobald sich die beiden Verarbeitungseinheiten (20, 20') in der Transportstellung befinden.

## Claims

1. Trailed agricultural machine (1) for harvesting a plant product such as grass, the said machine comprising a chassis (2) on which are mounted, on the one hand, an axle device (4) connecting two wheels (5, 5') to the chassis (2), and, on the other hand, two processing units (20, 20') each equipped with a respective grouping element (14, 14'), each processing unit (20, 20') being articulated with the chassis (2) at least around a folding axis (30, 30') so as to be able to selectively occupy at least i) a work position in which it extends transversely to a direction of advance (A) and rests at least partially on the ground (S), ii) a maneuvering position in which its weight is entirely supported by the chassis (2) and in which its outer end (21, 21') is further away from the chassis (2) than the outer end (27, 27') of each wheel (5, 5'), and iii) a transport position in which it extends transversely to the rolling axis (AR, AR') of the respective wheel (5, 5'),
agricultural machine (1) **characterized in that** the axle device (4) is configured in such a way that the distance (EV) between wheels (5, 5') is adjustable, at least between a tight configuration and a spaced configuration, and
**in that** the wheels (5, 5') occupy the spaced configuration in the maneuvering position and in the work position of at least one processing unit (20, 20').

2. Agricultural machine according to claim 1, **characterized in that** it comprises at least one joint (8, 8') incorporating a rod (9, 9') articulated, on the one hand, with one or each wheel (5, 5') and, on the other hand, with the chassis (2), the adjustment of the distance (EV) between wheels (5, 5') being achieved by pivoting the said joint (8, 8').

3. Agricultural machine according to claim 1, **characterized in that** the axle device (4) comprises a fixed part (7) rigidly fastened to the chassis (2), or integrated therein, and at least one movable part (6, 6'), the distance (EV) between the wheels (5, 5') being adjusted by sliding the or at least one movable part (6, 6') relative to the fixed part (7).

4. Machine according to claim 2 or 3, **characterized in that** it comprises at least one pivoting joint (8, 8') incorporating a linkage rod (9, 9') and an axle device (4) with a fixed part (7) and at least one movable part (6, 6') mounted so as to be able to slide relative to the said fixed part (7).

5. Agricultural machine according to any one of claims 1 to 4, **characterized in that**, in the spaced configuration of the wheels (5, 5'), each of the wheels (5, 5') is located at the same distance from the chassis (2), preferably from a midplane (M) of the machine (1).

6. Agricultural machine according to any one of claims 1 to 5, **characterized in that** the chassis (2) is lower in the spaced configuration than in the tight configuration.

7. Agricultural machine according to any one of claims 1 to 6, **characterized in that**, in the spaced configuration of the wheels (5, 5') and in the maneuvering position of the two processing units (20, 20'), the base distance (LE) which corresponds to the distance separating the respective outer ends (27 and 27') of the two wheels (5 and 5') is greater than one fifth of the total width (LT) of the machine (1), which corresponds to the distance separating the two opposite outer ends (21 and 21') of the said processing units (20, 20').

8. Agricultural machine according to any one of claims 1 to 7, **characterized in that**, in the maneuvering or work position of the processing units (20, 20'), the distance separating the two opposite outer ends (21 and 21') of the said processing units (20, 20'), or total width (LT) of the machine (1), is greater than 8 meters, preferably greater than 10 meters, and even more preferably greater than 12 meters.

9. Agricultural machine according to any one of claims 1 to 8, **characterized in that** when a single processing unit (20, 20') is in the maneuvering position and the total width (LT) of the machine (1) is greater than 10 meters, the base distance (LE) separating the outer ends (27, 27') of the wheels (5, 5') is greater than 3 meters.

10. Agricultural machine according to any one of claims 1 to 9, **characterized in that** it comprises at least one adjustment control actuator (23, 23') for the gap (I) between the two grouping elements (14, 14').

11. Agricultural machine according to any one of claims 1 to 10, **characterized in that** each grouping element (14, 14') of each processing unit (20, 20') is associated with a deflector plate (26, 26') fixed to the chassis (2) and oriented substantially in the direction of advance (A) of the moving machine (1).

12. Agricultural machine according to any one of claims 1 to 11, **characterized in that** each wheel (5, 5') is rigidly fastened to a movable part (6, 6') of the axle device (4), which movable part (6, 6') is connected so as to be able to slide along a corresponding longitudinal axis (AL, AL') transversely to the direction of advance (A) to a fixed part (7) of the said axle device (4) rigidly fastened to the chassis (2), the distance (EV) between the wheels (5, 5') being adjustable by sliding at least one of the said movable parts (6, 6') relative to the said fixed part (7).

13. Method for implementing a trailed agricultural machine (1) for harvesting a plant product such as grass, the said machine comprising a chassis (2) on which are mounted an axle device (4) connecting two wheels (5, 5') to the said chassis (2), and two processing units (20, 20') each equipped with a respective grouping element (14, 14'), each processing unit (20, 20') being articulated with the chassis (2) at least around a folding axis (30, 30') so as to be able to selectively occupy at least: i) a work position in which it extends transversely to the direction of advance (A) and rests at least partially on the ground (S), ii) a maneuvering position in which its outer end (21, 21') is further away from the chassis (2) than the outer end (27, 27') of each wheel (5, 5'), and iii) a transport position in which it extends substantially transversely to the rolling axis (AR, AR') of the respective wheel (5, 5'), the said method being **characterized in that** it consists of providing an axle device (4) configured in such a way that the distance (EV) between wheels (5, 5') is adjustable, at least between a tight configuration and a spaced configuration and, once at least one processing unit (20, 20') is in the maneuvering position or in the work position, moving the wheels (5, 5') further apart from one another by switching them into the spaced configuration.

14. Method for implementing a machine (1) according to claim 13, **characterized in that** the distance (EV) between wheels (5, 5') is adjusted automatically in the spaced configuration of the wheels (5, 5') once at least one processing unit (20, 20') is switched into the work position.

15. Method for implementing a machine (1) according to one of claims 13 or 14, **characterized in that** the distance (EV) between wheels (5, 5') is automatically adjusted to a tight configuration as soon as the two processing units (20, 20') are in the transport position.
